# EUROPEAN PATENT APPLICATION

(11) **EP 2 159 386 A2**
(43) Date of publication of application: **03.03.2010**
(21) Application number: 08014548.5
(22) Date of filing: 14.08.2008
(51) Int. Cl.: F01K 7/36, F01K 25/08, F22B 1/00, F22B 1/02

(54) **High efficiency solar thermal power generation system using a highly efficient heat exchanger and power conversion unit**

(71) Applicant: Tramontana Technology Group (Holding) GmbH, 6304 Zug (CH)
(72) Inventor: Tramontana, Michel, 60025 Loreto (IT)
(74) Representative: Emmerling, Friedrich

(57) **Abstract**

The present invention relates a thermal power generation system with at least one heat exchanger wherein the at least one heat exchanger comprises a main pipeline, at least one first pipeline connected to the main pipeline and extending in a radial direction from the main pipeline at a first section of the main pipeline, at least one second pipeline connected to the main pipeline and extending in a radial direction from the main pipeline at a second section of the main pipeline, and at least one longitudinal pipeline wherein the at least one longitudinal pipeline connects the at least one first pipeline and the at least one second pipeline and wherein the at least one longitudinal pipeline is equipped with a heat radiator having a fractal form.

## Description

### FIELD OF THE INVENTION

The present invention relates generally to thermal power generation system and in particular to a solar thermal power generation system utilizing high efficiency heat exchanger and a power conversion unit minimizing the heat loss and increasing the overall thermal efficiency.

### BACKGROUND OF THE INVENTION

Currently the overall efficiency of the solar thermal power generation system is restricted by the limited efficiency of the three main components, namely the solar collector system, the heat exchanger system, and the power conversion system. It is the main target to develop a cost effective solution which minimizes the loss in each components to maximize the output yield, i.e. the output electric power vs. overall input of the thermal energy, such as surface of the solar collectors or the amount of available heat from any heat source. The overall efficiency of the system is the key factor that determines the amount of time to reach the return of investment point. Also, the costs of initial investments plus running costs of the plant are important factors. The higher the overall efficiency and the lower the investments the shorter the time for return of investment.

The first choice of today's power conversion system in the solar thermal power generation is the Stirling engine, which renders efficiency typically in the range of 40 to 50%. Large steam turbines may render higher efficiency but only in several hundred MW output power range which is not appropriate in dimensions for today's solar thermal power generation plant.

Also, another important factor is the heat exchanger system, which is a critical connective point between the solar or any other heat sources and the power conversion system.

The heat exchangers currently used in fluid/fluid, fluid/gas(air), and gas(air)/gas(air) system with its serpentine configuration is ineffective and causes high thermal loss.

### SUMMARY OF THE INVENTION

It is therefore an object of the invention to provide a thermal power generation system which is highly efficient and cost effective and enables a high overall efficiency.

The object is solved by the subject matter of independent claim 1. Advantageous embodiments are subject matter to the dependent claims.

According to a preferred embodiment of the invention a thermal power generation system is provided with at least one heat exchanger. The at least one heat exchanger comprises at least one main pipeline, at least one first pipeline connected to the main pipeline and extending in a radial direction from the main pipeline at a first section of the main pipeline, at least one second pipeline connected to the main pipeline and extending in a radial direction from the main pipeline at a second section of the main pipeline, and at least one longitudinal pipeline wherein the at least one longitudinal pipeline connects the at least one first pipeline and the at least one second pipeline and wherein the at least one longitudinal pipeline is equipped with a heat radiator having a fractal form.

Preferably, the thermal power generation system further comprises a container with an inlet and an outlet, wherein the heat exchanger is arranged in the container. Preferably, the space around the at least one heat radiator inside the container is filled with metal wools. Furthermore, the at least one heat exchanger is an at least one fluid/gas heat exchanger and the main pipeline, the at least one first pipeline, the at least one second pipeline and the at least one longitudinal pipeline are adapted to transport heat transfer fluid from an external heat source.

Preferably, the thermal power generation system further comprises a regulation unit adapted to regulate influx or outflow of the heat transfer fluid by at least one first valve, wherein the heat exchanger further comprises an entrance at the first section of the main pipeline and an exit at the second section of the main pipeline and wherein the at least one first valve is mounted at the entrance or at the exit of the heat exchanger. Additionally, the system may comprise several heat exchangers, wherein the several heat exchangers are connected in parallel.

Preferably, at least one of the heat exchangers is air(gas)/air(gas) heat exchanger connected to the exhaust air/gas loop, which utilizes the residual heat and pressure of the exhaust air(gas) from the outlet nozzle of the power conversion unit.

Furthermore, the system preferably further comprises a power conversion unit, first connecting means for connecting the outlet of the container with the power conversion unit and second connecting means for connecting the inlet of the container with the power conversion unit. The second connecting means may be connected to an exhaust outlet of the power conversion unit flows, wherein the connecting means comprise at least one pre-tank and at least one second valve for connecting the pre-tank to the container.

Preferably, the power conversion unit is a rotary piston device comprising a rotor housing having an inner chamber, wherein the inner chamber has a circular side wall, a rotor enclosed in the inner chamber, wherein the rotor is rotatable about a fixed axis within the inner chamber and the axis and the circular side wall are aligned concentric, at least one working chamber formed by a space between the rotor and the inner chamber, and at least one movable partition, wherein the at least one partition is movable arranged in the rotor housing and is dividing the at least one working chamber into separate sections.

Preferably, the rotor comprises at least one sliding contact, wherein the sliding contact is in sliding contact with the circular side wall. Furthermore, the rotary piston device according to this aspect of the invention further comprises at least one intake nozzle arranged in the circular side wall on one side of the movable partition and at least one outlet nozzle arranged in the circular side wall on the other side of the at least one movable partition.

Additionally, it may comprise several working chambers separated by several sliding contacts and several movable partitions dividing each of the several working chambers into separate sections, wherein at least one intake nozzle is arranged in the circular side wall on one side of each of the movable partitions and at least one outlet nozzle is arranged in the circular side wall on the other side of each of the movable partitions. Preferably, according to this aspect it comprises exactly three working chambers separated by exactly three sliding contacts and exactly thee movable partitions. Preferably, the second connecting means are connected to the outlet nozzle and the first connecting means to the intake nozzle.

Another aspect of the invention the power conversion unit is a rotary device with concentric rotor/stator alignment for internal and external combustion, air/gas compression, steam turbine and other pumping applications, comprising annular space between rotor and stator wall. Preferably, the stator has a cylindrical form air-tight sealed to avoid leakage as high pressure, high temperature air/gas/steam/fluid flows through the annular chamber. This annular space, being a chamber for air/gas/steam/fluid expansion/compression and internal combustion, is separated by a movable diaphragm fixed through the stator wall with sliding contact perpendicular to the rotor. The rotary device further comprises at least one sliding contact between rotor and the annular wall of the stator separating the annular chamber, so that the air/gas/steam/fluid flowing through the annular chamber can create momentum to rotate the rotor.

According to yet another aspect of the present invention a heat exchanger is provided comprising at least one first pipeline wherein the at least one first pipeline is equipped with a heat radiator having a fractal form.

Preferably, further to the at least one first pipeline the heat exchanger additionally comprises at least one second pipeline connected to the at least one first pipeline and extending in a radial direction from the at least one first pipeline at a first section of the at least one first pipeline, at least one third pipeline connected to the at least one first pipeline and extending in a radial direction from the at least one first pipeline at a second section of the at least one first pipeline, and at least one longitudinal pipeline wherein the at least one longitudinal pipeline connects the at least one second pipeline and the at least one third pipeline and wherein the at least one longitudinal pipeline is equipped with the heat radiator having a fractal form.

According to yet another aspect of the present invention a heat exchange unit is provided comprising a first loop with at least one heat exchanger the at least one heat exchanger comprising at least one first pipeline wherein the at least one first pipeline is equipped with a heat radiator having a fractal form, and at least one second loop with at least one gas/gas heat exchanger for recycling residual energy of exhaust gas.

According to still another aspect of the present invention a heat exchange unit is provided comprising at least one first loop, the at least one first loop comprising a first inlet for a medium, a first entrance valve connected to the first inlet, a first container connected to the first entrance valve, a first exit valve connected to the first container, and a first outlet connected to the first exit valve, wherein the first entrance valve is adapted to control an inflow of the medium to the first container and the first exit valve is adapted to control an outflow of the medium from the first container, and wherein the first container comprises a first heat exchanger for exchanging thermal energy with the medium comprised in the first loop, at least one second loop, the at least one second loop comprising a second inlet for the medium, a second entrance valve connected to the second inlet, a second container connected to the second entrance valve, a second exit valve connected to the second container, and a second outlet connected to the second exit valve, wherein the second entrance valve is adapted to control an inflow of the medium to the second container and the second exit valve is adapted to control an outflow of the medium from the second container, and wherein the second container comprises a second heat exchanger for exchanging thermal energy with the medium comprised in the second loop, wherein the first and second heat exchanger is connectable to at least one heat transfer circle.

Preferably, the first and second exit valve is switched sequentially. Furthermore, the first and second inlet is connectable to an outlet of a power conversion unit, and the first and second outlet is connectable to an inlet of the power conversion unit.

Being compatible to any other heat source, this inventive system is not restricted to solar application. The modular setup in block configuration, i.e. collector block, heat exchanger block and power conversion block, ensures versatile configuration and easy combination with several alternative heat sources, e.g. solar heat during the daytime and heat from boiler and/or accumulator during the nighttime.

According to yet another aspect of the present invention a heat exchanger unit is provided comprising several aforementioned heat exchangers, in which at least one heat exchanger is connected to the exhaust air/gas loop, which is connected to the outlet nozzle of the power conversion unit. This air/gas to air/gas heat exchanger utilizes the residual heat and pressure from the outlet of the power conversion unit to compress and recycle the energy as a pre-heater inside the heat exchanger container. The said heat exchanger is regulated by valves at the inlet and at the outlet of the heat exchanger. The cold air/gas flows to the pre-tank and then transferred to the heat exchanger unit via at least one valve. The heating up procedure of the working gas is carried out sequentially and regulated via valves in the following sequences: loading of the exhaust air/gas in the heat exchanger while compressing it - preheating of the working gas - outlet of the air/gas from the heat exchanger - loading of the hot working fluid connected to the solar panel - heating up of the working gas while compressing it - open the valve of the hot and compressed air to the pipeline guiding to the power conversion unit.

Preferably, the said heat up procedure is carried out with several heat exchanger units connected in parallel in order to minimize the dead time of the hot and compressed air to the power conversion unit.

According to yet another aspect of the present invention a method for operating a heat exchanger unit is provided comprising the steps of filling the heat exchanger unit with gas from a tank via a valve at an inlet of the heat exchanger unit, closing the valve at the inlet and a valve at an outlet of the heat exchanger unit, loading heated gas into a first heat exchanger via a further valve placed at the first heat exchanger wherein the first heat exchanger is arranged inside the heat exchanger unit, releasing the gas in the first heat exchanger via the further valve to the tank after a specific first time period, loading heated fluid into a second heat exchanger via an additional valve wherein the second heat exchanger is arranged inside the heat exchanger unit thus further heating up the preheated gas in the heat exchanger unit, and transferring the gas in the heat exchanger unit via the valve at the outlet of the heat exchanger unit to a further unit after a specific second time period.

### BRIEF DESCRIPTION OF THE FIGURES

In the following the present invention is described in more detail in reference to the attached figures and drawings. Similar or corresponding details in the figures are marked with the same reference numerals.
- Figure 1: shows a heat exchanger according to a preferred embodiment of the invention.
- Figure 2: shows a further aspect of the heat exchanger according to the preferred embodiment of the invention.
- Figure 3: shows a thermal power generation system according to the preferred embodiment of the invention.
- Figure 4: shows a fluid/gas heat exchanger and a power conversion unit of the thermal power generation system shown in Figure 3.
- Figure 5: shows a power conversion unit according to the preferred embodiment of the invention.
- Figure 6: shows another version of a power conversion unit according to the preferred embodiment of the invention.
- Figure 7: shows yet another version of a power conversion unit according to the preferred embodiment of the invention.
- Figure 8: shows a thermal power generation system according to another preferred embodiment of the invention.

### DETAILED DESCRIPTION OF THE INVENTION

The following paragraphs will describe various embodiments of the present invention.

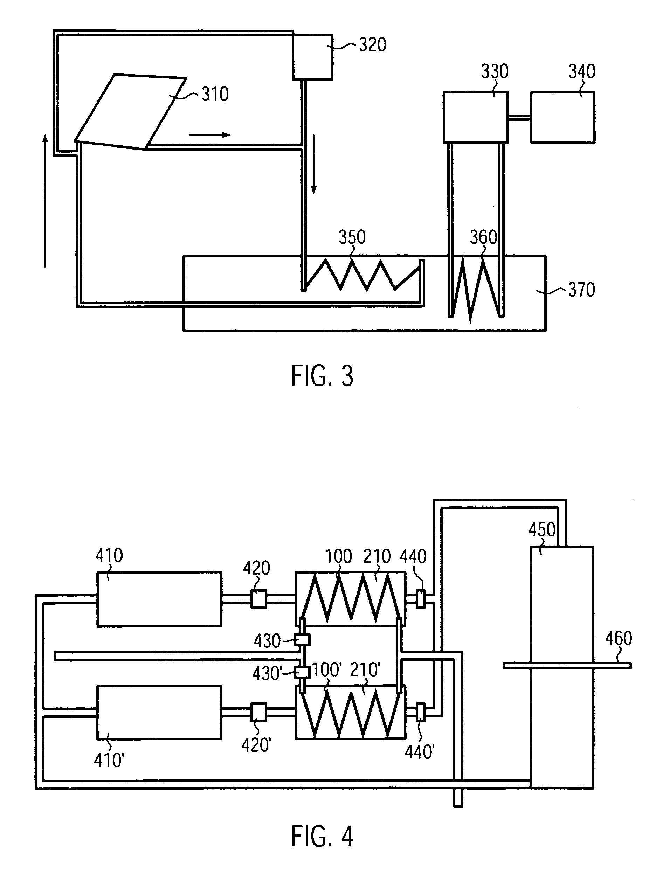

According to a preferred embodiment of this invention the thermal power generation system consists of solar thermal collector, primary heat transfer circle, back-up boiler, thermal accumulator, secondary heat transfer circle, fluid/gas(air) heat exchanger, and power conversion system as will be explained in detail in regard to Figure 3.

According to an alternative embodiment of this invention the thermal power generation system utilizes a fluid/gas(air) heat exchange unit and a power conversion unit, which are very efficient, having minimum loss of thermal energy only. Preferably both systems refer to solar thermal power generation systems as will be explained in detail in regard to Figure 4.

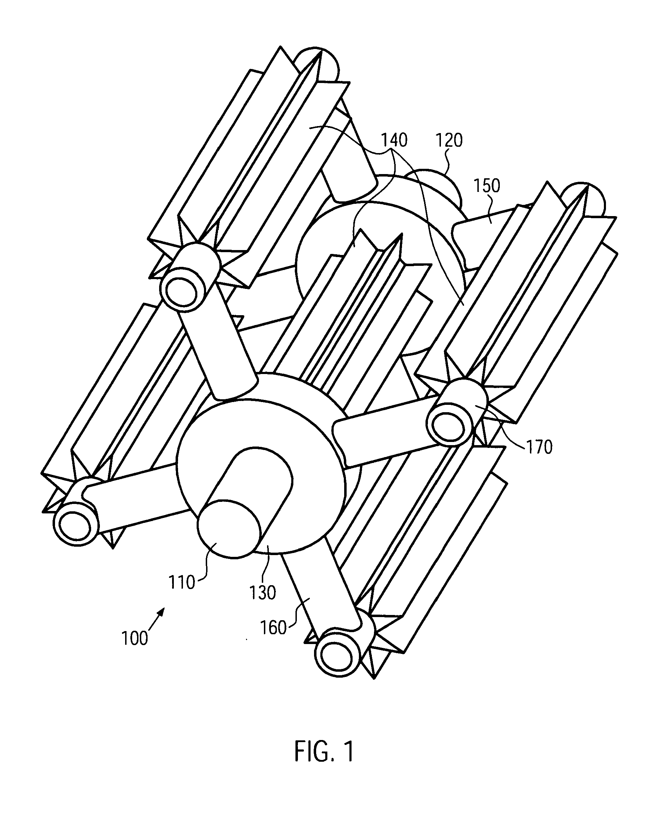

Both embodiments preferably comprise a heat exchanger 100 as shown in Figure 1. The heat exchanger 100 comprises a main pipeline. This main pipeline extends in a longitudinal direction. One or more first pipelines 160 are connected to the main pipeline at a first section of the main pipeline. Preferably, this first section is one end of the main pipeline where the entrance 110 for the heat transfer fluid, the steam or the hot gas is located. The first pipelines 160 extend in a radial direction from the main pipeline. As shown in Figure 1 four first radial pipelines 160 are arranged at the one end of the main pipeline. Furthermore, second radial pipelines 150 are connected to the main pipeline preferably at a second section of the main pipeline. Preferably, this second section is the other end of the main pipeline where the exit 120 for the heat transfer fluid, the steam or the hot gas is located. Preferably, as many first radial pipelines 160 are arranged at the main pipeline as second radial pipelines 150 exist and the radial pipelines 150 and 160 are connected perpendicularly to the main pipeline. The number of radial pipelines depends on the space available but is not limited. Preferably, the radial first and second pipelines 150 and 160 have the same length. Alternatively, they have different length.

The first and second radial pipelines 160 and 150 are connected preferably at their outer ends with longitudinal pipelines 170 wherein each first pipeline 160 is connected via a longitudinal pipeline with a second pipeline 150 in such a way that the heat transfer fluid, the steam or the gas can flow from the first pipeline 160 to the second pipeline 150. As indicated in Figure 1, the longitudinal pipelines 170 are arranged parallel to the main pipeline, however further arrangements are possible depending on the available space and the application of the heat exchanger. Alternatively, longitudinal pipelines 170 do not connect the first and second radial pipelines directly opposite as shown in Figure 1 but first radial pipeline 160 with a second radial pipeline 150 next to the position directly opposite.

Preferably each of the longitudinal pipelines is equipped with a heat radiator 140. This heat radiator can have a fractal form. Preferably, the surface of the heat radiator 140 splits up into further geometric forms in order to increase the surface area. Having such a fractal form the heat radiator 140 can exchange more efficiently thermal energy with the ambience in view of the increased surface of the heat radiator 140.

Furthermore, not only the longitudinal pipelines 170 are equipped with a heat radiator 140 but also the main pipeline. Additionally, the radial pipelines 150 and 160 may be also equipped with heat radiators 140.

Preferably, the heat exchanger 100 is made of a material with a high thermal conductivity. This might be metal such as copper, aluminum, iron etc or other materials such as graphite or even compounds which allow an efficient heat transfer from the inner of the pipelines to the ambient around the pipelines. According to one preferred version of the heat exchanger 100 the heat exchanger is a fluid/gas(air) heat exchanger. This fluid/gas(air) heat exchanger is characterized by very high efficiency and thermal transfer rate.

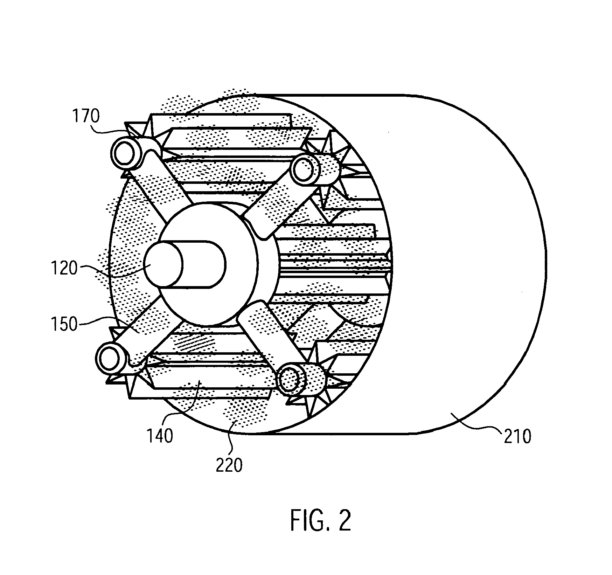

Figure 2 shows the above described heat exchanger 100 within a container 210 or tank. Thereby, Figure 2 shows a section through the container so that the heat exchanger 100 can be seen inside the container. Preferably, the container is sealed and provides only an inlet and an outlet for gas. The space between the heat radiators in the container is filled with metal wools 220 for better heat transmission from the heat exchanger 100 to the gas that flows through the heat exchange container 210.

Preferably, the heat exchanger 100 has a valve at least at the entrance 110 or at the exit 120 of the heat exchanger 100 for controlling the inflow and outflow the heat transfer fluid. Furthermore, at the inlet and the outlet of the heat exchange container 210 there is also preferably a valve for controlling the inflow and outflow of the gas. Once the gas, in the following called working gas, is filled into the heat exchange container 210 and the valves at the inlet and the outlet of the heat exchange container 210 are closed the working gas can be heated via the heat exchanger 100. The amount of energy transferred from the heat transfer fluid to the working gas can be controlled via the valve in the heat transfer fluid cycle. As both valves at the inlet and the outlet of the heat exchange container 210 are closed during the heating process the working gas is not only heated but also the pressure of the working gas increases.

In an alternative version of the preferred embodiment explained in regard to Figures 1 and 2 the heat exchange container 210 not only comprises heat exchanger 100 but additionally an air/gas to air/gas heat exchanger for recycling e.g. the residual energy of exhaust air/gas. Preferably, the air/gas to air/gas heat exchanger also comprises a valve for controlling the through put of the air/gas.

Preferably, the valves are controlled by a control unit which preferably receives additionally signals from sensors such as temperature sensors and/or control sensors of a power conversion unit. Via these sensors the control unit determines when the valves at the inlet and the outlet of the heat exchange container 210 are opened and closed, the valve at the entrance 110 or at the exit 210 of the heat exchanger 100 is opened and closed and the valve of the air/gas to air/gas heat exchanger is opened and closed.

Thus, the working gas can be pre-heated in a first step via the air/gas to air/gas heat exchanger using the residual energy of exhaust air/gas flowing into the air/gas to air/gas heat exchanger. In a second step, the working gas the further heated by pumping hot heat transfer fluid into the heat exchanger 100.

The heat exchange container 210 preferably comprises at least one heat exchanger 100. According to the alternative version of the preferred embodiment explained above the heat exchange container 210 comprises not only at least one heat exchanger 100 but also at least one air/gas to air/gas heat exchanger.

Figure 3 shows a thermal power generation system according to the preferred embodiment of the invention. In detail, it shows a solar panel 310 for generating thermal energy in a primary heat transfer circle. The working medium of the solar collector panel 310 is preferably a fluid suitable to transport the thermal energy efficiently. The solar panel 310 is connected to a heat exchanger 350 which is comprised in an accumulator 370. In that way, the fluid heated in the solar panel 310 can be transported via the connection which is preferably made by pipes to the heat exchanger 350. The heat exchanger 350 then exchanges the heat with the accumulator 370. The fluid in the heat exchanger 350 is then transported back to the solar collector panel 310 in order to be heated up again.

Alternatively to the solar collector panel 310, a heat pump or any other thermal energy source can be used.

Preferably, an additional loop is set up parallel to the solar collector panel 310. This parallel pipe loop comprises a backup boiler 320. In that way, the fluid, or alternatively the gas in the loop can be heated during the times when no solar energy is available for heating up the fluid or gas in the solar collector panel 310.

Thus, in the primary heat transfer circle the generated thermal energy is transported from the thermal energy source to the accumulator 370 where it is stored. Either the solar collector panel 310 or the backup boiler 320 or both generate the thermal energy in the primary heat transfer circle.

Furthermore, the thermal power generation system comprises next to the above described primary heat transfer circle a secondary heat transfer circle which consists of a fluid/gas heat exchange unit 330 and a heat exchanger 360 also comprised in the accumulator 370. In the secondary heat transfer circle, the thermal energy stored in the accumulator 370 is transferred from the accumulator 370 via heat exchanger 360 to the fluid/gas heat exchange unit 330. As a medium for transporting the heat, preferably fluid is used.

In the fluid/gas heat exchange unit 330, the thermal energy transported in the secondary heat transfer circle by the working fluid is transferred to a working gas or air via fluid/gas heat exchange unit 330. The heated-up working gas or air is then transported to power conversion unit 340 in which the thermal energy transported by the working gas or air is converted into electrical energy.

The thermal power energy system, according to the preferred embodiment of the invention, works as described in the following.

In the primary heat transfer circle thermal energy is generated via the solar collector panel 310 or alternatively or additionally via the backup boiler 320 which is connected in parallel to the solar collector 310. Preferably fluid is used to transport the thermal energy generated in the solar collector panel 310 and/or backup boiler 320. The thermal energy is transported to the heat exchanger 350 in the accumulator 370. In the heat exchanger 350, the thermal energy transported by the fluid is exchanged with the medium in the accumulator 370. Then the fluid flows back to the solar collector panel 310 and/or backup boiler 320 in order to be heated up again. In a preferred version, the parallel loops of the solar collector panel 310 and the backup boiler 320 are connected via valves so that the flow of the fluid can be controlled through both systems.

Alternatively, gas is used in the primary heat transfer circle to transport the generated thermal energy.

Preferably, the medium in the accumulator 370 is a fluid with a high heat capacity. Thus, the thermal energy can be stored efficiently in the accumulator 370 in order to be picked up by heat exchanger 360 of the secondary heat transfer circle.

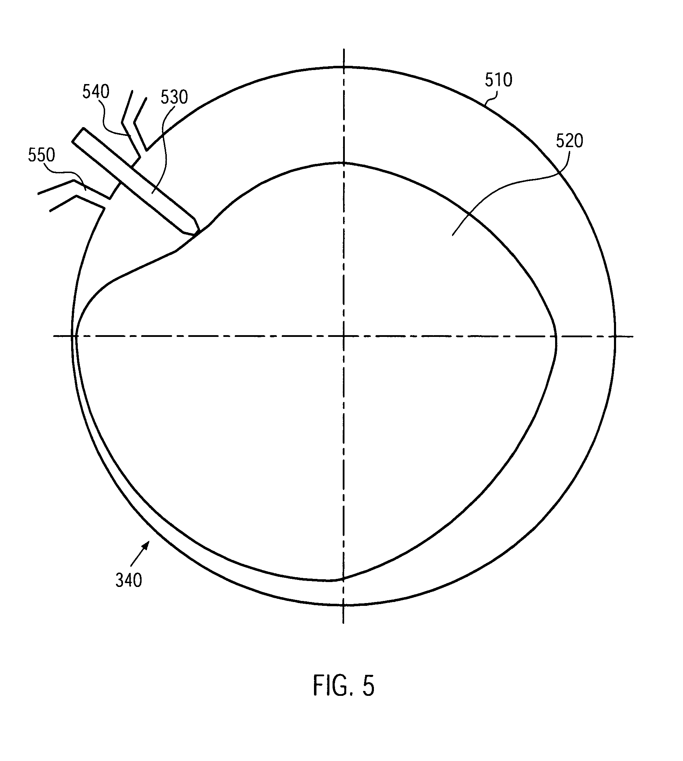

In the secondary heat transfer circle, the thermal energy picked up from the accumulator 370 is transported preferably also via a fluid to the fluid/gas heat exchange unit 330. Preferably, the heat exchange unit 330 is the heat exchanger 100 shown and explained in regard to Figures 1 and 2. In that case the pipes of the secondary heat transfer circle are connected to entrance 110 and exit 120 of the heat exchanger 100. Via this fluid/gas heat exchange unit 330, gas is heated up and transported to the power conversion unit 340 which is preferably the power conversion unit shown in Figures 5 to 7 and described further below. The heated gas is used for driving the power conversion unit 340 which converts the thus generated kinetic energy in electrical energy.

In an alternative version the primary heat transfer circle is directly connected to the fluid/gas heat exchange unit 330. This direct connection may be used e.g. if no buffering of the thermal energy is necessary.

Figure 4 shows an alternative version of the fluid/gas heat exchange unit 330 of Figure 3. In this alternative version of the fluid/gas heat exchange unit 330 the secondary heat transfer circle which transports the heated fluid from the heat exchanger 360 is connected to an number of components of the fluid/gas heat exchange unit 330. Preferably, the fluid/gas heat exchange unit 330 comprises two parallel loops for cooling down and heating up the working gas.

In the first loop, a cold gas (air) tank 410 is connected to valve 420 which is further connected to the container 210 as already described in regard to Figure 2. The container 210 comprises heat exchanger 100. Preferably the entrance 110 of the heat exchanger 100 is connected via valve 430 to the secondary heat transfer circle. The exit 120 of the heat exchanger 100 is also connected to the secondary heat transfer circle. The outlet of the container 210 is connected via valve 440 to an inlet nozzle of the power conversion 340.

Figure 4 shows the housing 450 of the power conversion unit 340 and a power delivery shaft 460. Furthermore, the power conversion unit 340 comprises in the housing 450 an outlet nozzle for the cooled down air or gas which is connected via pipes to the inlet of cold gas (air) tank 410.

Parallel to the aforementioned first loop comprising the cold gas (air) tank 410, valve 420, heat exchanger 100 and container 210, a parallel second loop with the same design is comprised by the fluid/gas heat exchange unit 330 which comprises cold gas (air) tank 410', valve 420', heat exchanger 100', valve 430', container 210' and valve 440'. Both loops are connected in parallel so that one loop can cool down, respectively heat up the working gas when the other loop provides the heated up working gas to power conversion unit 340.

In a first step the working gas coming from the power conversion unit 340 is cooled down in the cold gas (air) tank 410 of the first loop and the cooled down working gas is transported to container 210. For this valve 420 is open and valve 440 closed. Then valve 420 is closed and the working gas is heated up in the container 210 via the thermal energy provided by the heat exchanger 100. The heat in the container 210 can be controlled via valves 430. When the working gas is heated up sufficiently valve 440 is opened and the heated up working gas is transferred to the power conversion unit 340. As the gas is heated up isochorely the pressure of the working gas is increased. This can be used to drive the power conversion unit 340. When the valve 440 of the first loop is open the working gas in the second loop can be heated up in order to avoid a down time of the system. Thus, valves 440 and 440' are preferably switched sequentially.

Alternatively, only one loop is provided if the down time of the system is not relevant for the power conversion unit 340.

According to another alternative, three, four or even more parallel loops are used in order to provide a sufficient amount of heated up working gas. Thus, several fluid/gas(air) heat exchange loops are connected in parallel and supply the compressed hot gas (air) to the power conversion system 340. The pre-tanks 410 and 410' cool down the working gas (air) coming from an exhaust chamber of the power conversion unit 340 connected to the heat exchange loops via valves. After passing through the heat exchanger tanks 210 and 210' the hot working gas (air) flows to the expansion chamber of the power conversion unit 340 via an inlet nozzle. The gas flow is regulated by valves 440 and 440'. Also, the hot fluid from the primary heat circle that flows into the heat exchanger tanks 210 and 210' through the pipeline of the heat transfer circle is regulated by valves 430 and 430' at the entrance of the heat exchanger tanks 210 and 210'. Thus the volume of the hot, compressed working gas, i.e. the amount of energy to operate the power conversion unit can be regulated precisely.

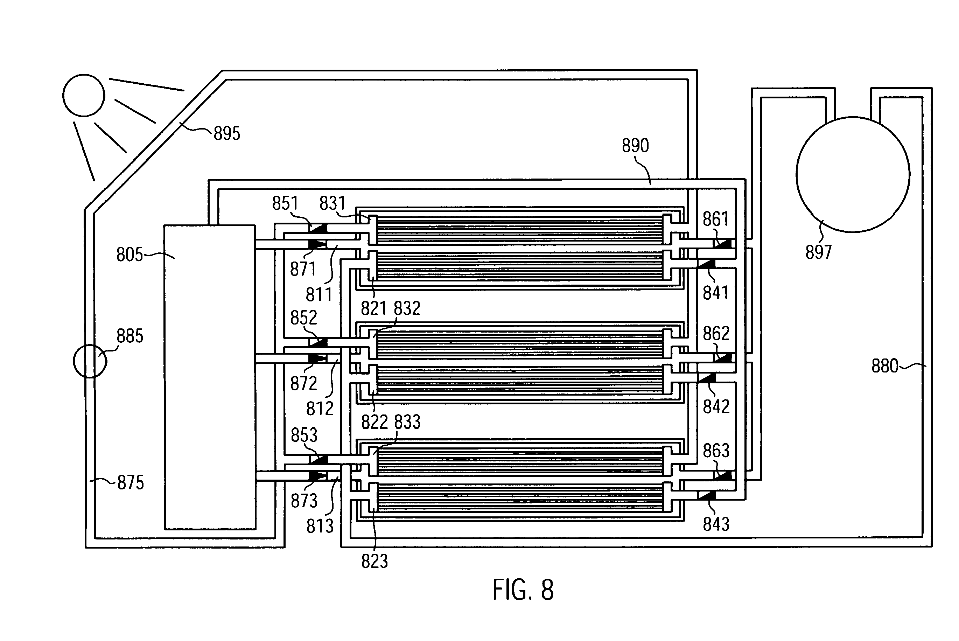

Figure 8 shows another preferred embodiment of the invention. There is the primary heat transfer circle 875 with a solar collector panel 895 and three heat exchanger units connected in parallel. The main pump 885 regulates the circulation flow of the working fluid in the primary heat transfer circle 875. The valves 851, 852 and 853 at the entrance section of the heat exchangers 831, 832 and 833 of the three heat exchanger units regulate the influx of the working fluid into the heat exchangers 831, 832 and 833 which have been already explained in regard to Figures 1 and 2.

Beside the first heat transfer circle there exists at least one second air/gas to air/gas heat transfer circle, which is connected to the exhaust outlet of the power conversion unit 897 via connection 880 and guides the exhaust air/gas to the air/gas to air/gas heat exchangers 821, 822 and 823 of the heat exchanger units which have been already explained above. This second heat transfer circle utilizes the residual heat and pressure from the power conversion unit 897. It compresses the exhaust air/gas inside the heat exchangers 821, 822 and 823 and recycles the residual energy of the exhaust air/gas inside the heat exchanger units. The cold air/gas then flows to the pre-tank 805 via the valves 841, 842 and 843 at the exit section of the heat exchanger units.

From the pre-tank 805 the cold air/gas flows into the heat exchanger units via the valves 871, 872 and 873 at the entrance sections 811, 812 and 813 of the heat exchanger units. The compressed hot air/gas inside the heat exchanger units then flows via the valves 861, 862 and 863 at the exit section of the heat exchanger units into the working chamber(s) of the power conversion unit 897.

The heating up procedure of the working gas is carried out sequentially and regulated via valves, e.g. in the following sequences.

In a first step the working gas is filled from the pre-tank 805 to the heat exchanger units via valves 871, 872 and 873. Furthermore, the exhaust air/gas of the power conversion unit 897 is loaded in the heat exchangers 821, 822 and 823 while compressing it. The exhaust air/gas transfers excess heat to the working gas in the heat exchanger units via heat exchangers 821, 822 and 823. After this the compressed and cooled down exhaust air/gas flows then via valves 841, 842 and 843 to the pre-tank 805.

In a next step the hot working fluid connected to the solar panel is loaded into the heat exchangers 831, 832 and 833 via valves 851, 852 and 853. Thus, the preheated working gas is further heated up and compressed.

Finally, the hot and compressed working gas is transferred to the power conversion unit 897 by opening the valves 861, 862 and 863 at the exit section of the heat exchanger units.

Preferably, the heat exchanger units are operated in sequence. This means that preferably one exchanger unit is in the preheating process while the other heat exchanger units are in the heating process and the process of transferring the hot and compressed working gas to the power conversion unit 897. In that way there is sufficient hot and compressed working gas available for each working cycle of the power conversion unit 897. Furthermore, this preferred embodiment is not restricted to three heat exchanger units but the number of heat exchanger units may vary in dependence of the amount of required working gas or number of working cycles or working chambers of the power conversion unit 897.

Preferably, the said heat up procedure is carried out with several heat exchanger units connected in parallel in order to minimize the dead time of the hot and compressed air to the power conversion unit.

In the preferred embodiment of this invention a power conversion system is utilized which comprises a rotary power conversion system. Figure 5 shows such a preferred version of the power conversion unit.

Preferably, the power conversion unit is a rotary device with a single working chamber. In particular, it shows a rotary piston device with a rotor housing having an inner chamber. The inner chamber has a circular side wall 510.

Furthermore, a rotor 520 is shown which is enclosed in the inner chamber. Preferably, the rotor has an excentric shape, is rotatable about a fixed axis within the inner chamber and the axis and the circular side wall are aligned concentric. In Figure 5 the position of the fixed axis is indicated by the intersection of the vertical and horizontal line. The rotor 520 can be massive, hollow or partially hollow depending on its size as well as on the optimized weight for particular application.

According to one version the rotor 520 has an elliptical shape and is firmly attached to a power delivery shaft in an excentric way. The rotor 520 is mounted inside the cylindrical inner chamber, which is air-tight sealed like a vacuum chamber, and which is arranged in a stator, i.e. rotor housing. The power delivery shaft is mounted via a bearing concentrically to the cylindrical inner chamber. The flat lateral surfaces of the rotor is in sliding contact with the stator wall, which is air and liquid tight so that no humidity or gas can creep into the sliding contacts of rotor and stator.

As the rotor housing does not move relative to the rotor the rotor housing or at least parts of the rotor housing are also called stator. Accordingly, the circular side wall 510 of the inner chamber is alternatively denoted as annular stator wall 510.

Between the rotor and the inner chamber there is formed a cavity which forms the working chamber of the rotary device. The working chamber is divided in two different spaces by a movable partition 530 which is in touch with the rotor. The partition 530 is movable arranged in the rotor housing so that it can follow the excentric shape of the rotor. Preferably, the movable partition 530 is movable radially to the fixed axis. In that way the movable partition 530 moves away from the fixed axis and back to the fixed axis thus following the shape of the rotor and always being in contact with the rotor 520, when the rotor 520 rotates.

The annular space between the rotor and the circular side wall 510 forms firstly a first working chamber also called expansion chamber for air, various gases, steam and fluids and a second working chamber also called compression chamber for air, various gases, steam and fluids. Secondly the annular space forms a combustion chamber when fuel is injected into compressed air.

Preferably, the rotor 520 comprises a sliding contact. As shown in Figure 5 and as mentioned above, the rotor is formed excentric forming one protrusion on one side of the rotor and preferably the sliding contact is part of this protrusion. This sliding contact touches the circular side wall. Preferably, the distance between the fixed axis of the rotor and the outer end of the protrusion corresponds with the radius of the inner chamber of the rotary piston device. Thus, the rotor can rotate in the inner chamber so that the sliding contact, i.e. the outer end of the protrusion is in contact with the circular side wall 510 of the inner chamber throughout a complete 360° rotation. The moveable partition 530, which can be formed as a diaphragm, is moveable in a radial way so that the sliding contact of the rotor 520 can also move over this part of the circular side wall 510 when performing a 360° rotation.

As described in regard with Figure 5 the annular space starts from the contact between the sliding contact of the rotor and the stator, which is also air-tight in order to avoid leakage of compressed air/gas/steam/fluid. The annular space reaches its maximum distance between the rotor and the stator, then, gradually decreases its distance until it reaches the sliding contact point again.

For the surfaces with sliding contacts various metals, alloys and ceramics with very low coefficient of friction are used.

Preferably, the sliding contact comprises a sealing so that the sliding contact separates the first part of the working chamber from the second part of the working chamber hermetically.

Preferably, the moveable partition 530 is arranged in a sealed way in the circular side wall 510 so that mounting of the moveable partition 530 in the circular side wall 510 is hermetically sealed to the outer part of the rotary piston device. Furthermore, a part of the moveable partition 530 which is in contact with the rotor preferably comprises a sealing so that the first part of the working chamber and the second part of the working chamber are also separated hermitically by the moveable partition 530.

Preferably, this diaphragm 530 is movable in perpendicular direction through the stator wall 510 exerting constant pressure on the rotor surface in order to separate the working chamber in two chambers.

Furthermore, Figure 5 shows an outlet nozzle 540 and an intake nozzle 550. Both nozzles are arranged on opposite sides of the moveable partition 530. Preferably, both nozzles 540 and 550 are arranged close to the moveable partition 530. The air/gas/steam/fluid intake nozzle 550 is for intaking air/gas/steam/fluid and the outlet nozzle 540 is for outlet air/gas/steam/fluid.

In the case that rotor 520 rotates counterclockwise, the smaller part of the working chamber shown in Figure 5 below the moveable partition and in contact with the intake nozzle will enlarge. In the case that the intake nozzle is closed, underpressure will be created in this first part of the working chamber as the sliding contact of the rotor 520 and the moveable partition 530 separate the first part of the working chamber hermetically from the second part of the working chamber.

Simultaneously, in the second part of the working chamber an overpressure is created, in the case that the outlet nozzle 540 is closed. The further the rotor 520 rotates the further the under/over pressure increases. Thus, the rotary device can be used either for evacuating a cavity via inlet nozzle 550 or to create overpressure via outlet nozzle 540.

Alternatively, gas, steam or fluid with overpressure can be filed in the first part of the working chamber via intake nozzle 550. In the case that outlet nozzle 540 is open, the created overpressure in the first part of the working chamber will result in a movement of the rotor as the gas, steam or fluid with overpressure tries to expand thus enlarging the first part of the working chamber and thereby moving the rotor 520. In that way thermal energy is converted into mechanical energy.

Accordingly, the inlet and expansion of compressed air/gas/steam/fluid into the expansion chamber starts the rotor 520 to rotate. The air/gas/steam/fluid inside the other chamber then will be compressed and pushed out through the outlet nozzle 540. Through the expansion of air/gas/steam/fluid and the continuous supply of the air/gas/steam/fluid into the expansion chamber the rotor 520 accelerates until the diaphragm reaches the sliding contact between the rotor 520 and annual stator wall 510.

Inside the compression chamber the air/gas/steam/fluid is compressed by the rotating movement and pushed out through the outlet nozzle 540. The compressed air/gas/steam/fluid may flow into an external compressor/heat exchanger, from where it is recycled as the working air/gas/steam/fluid supplied again into the expansion chamber. This system can be halted rapidly by stopping the supply of compressed air/gas/steam/fluid and/or by reversing the flow of compressed air/gas/steam/fluid back to the compressor chamber.

The intake and outlet nozzles can be preferably placed in the direct vicinity of the diaphragm 530 in order to avoid any brake effect by residual air/gas/steam/fluid in the compression chamber and vacuum generation in the expansion chamber.

According to the preferred version of the power conversion unit, the moveable partition 530 is moved by rotor 520. For this, the rotor housing comprises a spring mechanism which presses the moveable partition 530 against the rotor 520. When the rotor 520 moves, it moves the moveable partition 530 into the circular side wall 510 according to its excentric shape. The spring force of the spring mechanism moves the moveable partition 530 back when the sliding contact of the rotor 520 has passed the position of the moveable partition 530. Alternatively, the rotary piston device comprises a guiding mechanism which guides the movement of the moveable partition 530 in phase with the movement of rotor 520. Preferably, the guiding mechanism provides a guidance for the moveable partition 530 which forces the moveable partition to move into the circular side wall 510 and back into the working chamber in phase with the rotor 520 always providing a tight contact of the moveable partition 530 with the rotor 520 thereby separating the first part of the working chamber from the second part of the working chamber hermetically. According to another alternative, a combination of the guiding unit and a spring mechanism is provided, wherein the major movement of the moveable partition 530 is performed via the guidance of the guiding unit and the spring mechanism ensures that there is sufficient contact pressure of the moveable partition 530 with the rotor 520 in order to establish a hermetical separation of the first part of the working chamber from the second part of the working chamber.

The rotary device shown in Figure 5 is not restricted to a rotor having only one protrusion, but can also comprise a rotor having several protrusions which form several sliding contacts. In that way, several working chambers are formed. Each of these working chambers is separated via additional moveable partitions 530. Additionally at least one outlet nozzle 540 is placed on one side of each of the moveable partition 530 and at least one intake nozzle 550 on the other side of each of the moveable partition 530. In that way, a rotary piston device is provided with a number of working chambers, thus increasing the power and torque of the rotary piston device.

Therefore, according to alternative versions the rotary piston device consists of several pairs of expansion and compression chambers. Depending on the size of the rotary piston device it can have 2, 3, 4, 5, 6, 7, 8 or more chamber pairs. There is no limitation in terms of the number of the chamber pairs. For small and middle sized systems the preferred numbers of chamber pairs is 3. With 3 chamber pairs rotational force is simultaneously generated at 3 different places during the 360 degrees rotation cycle.

Already a system with 40 cm diameter can generate 1 MW or more power. It is an extremely efficient system in terms of thermal efficiency and power density. The efficiency of this power conversion system can reach 70% and higher. An increase of the engine size would render an exponential growth of the output power.

The working gas can be air, helium, nitrogen, ammoniac gas, etc., i.e. any kind of gas with high expansion rate, as well as steam and fluid.

The application of this system is not limited to external combustion system, but it can also be utilized as compressor, fluid pump, vacuum pump, etc.

As already indicated above, if thermal energy is applied to the rotary piston device, the thermal energy can be converted into mechanical energy. Preferably, energy from thermal converters or energy resulting from combustion can be used in order to cause the movement of the rotor.

Preferably, the outlet nozzle 540 and the intake nozzle 550 are placed depending on the application of the rotary piston device. As shown in Figure 5 the outlet nozzle 540 and the intake nozzle 550 are placed in the circular side wall 510. Alternatively, both outlet nozzle 540 and intake nozzle 550 are placed in the lateral stator wall, i.e. the upper and/or lower wall of the inner chamber. Furthermore, either the outlet nozzle 540 or the intake nozzle 550 is placed in the circular side wall 510 and the other is placed in one or both of the lateral stator walls.

Furthermore, according to another version of the power conversion unit the rotor housing comprises several inner chambers arranged preferably parallel. Each of the inner chambers comprises a rotor wherein the rotors are preferably connected with each other via a common shaft which is arranged along the rotational axis of the rotors.

In another embodiment parallel operation with several rotary devices aligned on the same power delivery shaft can be realized. There is no limitation in the number of devices operated in parallel.

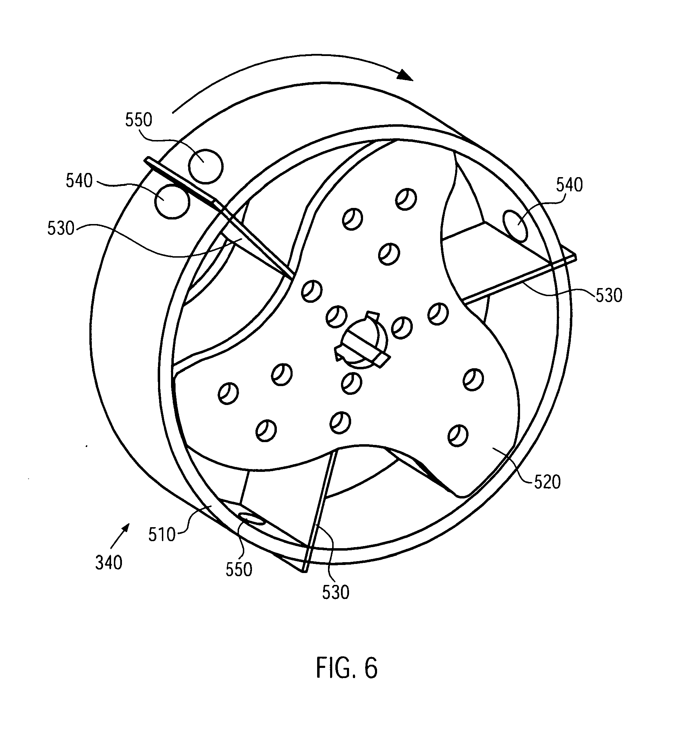

Figure 6 shows the rotary device with three working chambers according to a further embodiment of the invention. As already explained in regard to Figure 5, the inner chamber of the rotary piston device is radially limited by a circular side wall 510.

Furthermore, the inner chamber comprises a rotor 520. As shown in Figure 6, rotor 520 has three sliding contacts which are in touch with the circular side wall 510. Accordingly, three chambers are formed between the circular side wall 510 and the rotor 520. Each of these three working chambers is separated into expansion and compression chambers by moveable partitions 530. The moveable partitions 530 are mounted as already explained in regard to the embodiment shown in Figure 5.

Furthermore, at least one outlet nozzle 540 and at least one intake nozzle 550 are placed next to each moveable partition 530. Thus, each working chamber comprises one moveable partition 530, at least one outlet nozzle 540 and at least one intake nozzle 550. As the order of the nozzles is opposite to that shown in Figure 5, the preferred rotation direction of the rotary piston device shown in Figure 6 is clockwise.

Furthermore, one borehole is shown along the rotational axis of the rotor 520. Preferably, the borehole additionally provides grooves in order to receive the shaft.

As further shown in Figure 6 from a top view, the rotor has a boundary which can be separated in three sections wherein each section has an "S"-shape. In view of this "S"-shape of the sections of the boundary of the rotor 520, the first part of the boundary of each section has a convex form and the second part has a concave shape from a top view.

The working principle is the same as already explained in regard to the embodiment shown in Figure 5. Furthermore, as already explained in context with Figure 5 the rotary piston device shown in Figure 6 may also comprise more than 3 working chambers. Moreover, several rotary piston arrangements can be connected in parallel via a common shaft through the borehole, thus increasing the power and torque of the rotary piston device.

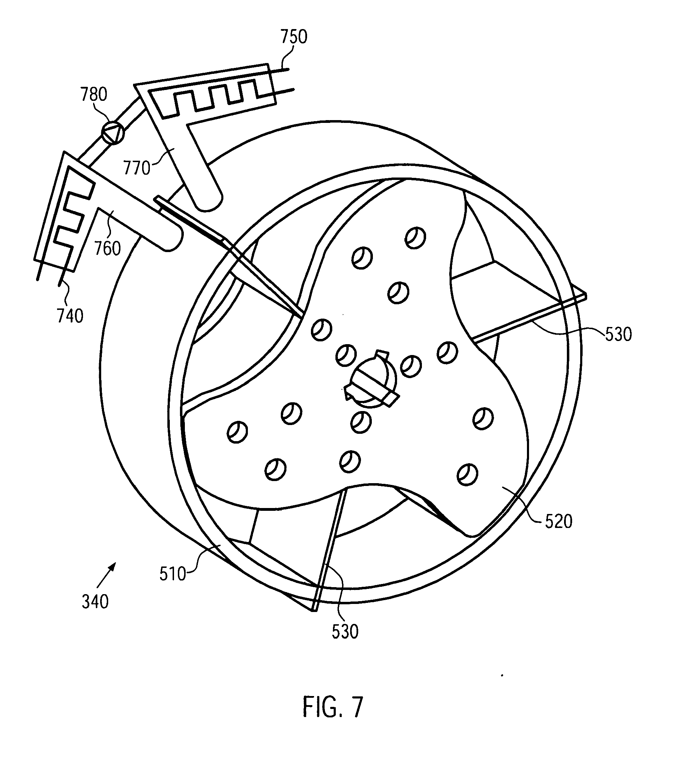

Figure 7 shows the rotary device according to yet another embodiment of the invention. The rotary piston device shown in Figure 7 is based on the device already explained in regard to Figure 6. Figure 7 shows the circular side wall 510 which limits radially the inner chamber of the rotary piston device. The inner chamber comprises a rotor 520, as already explained in regard to Figure 6. The rotor forms three working chambers together with the circular side wall 510 wherein each working chamber is additionally separated by moveable partitions 530. Furthermore, one outlet nozzle and one inlet nozzle is shown. The outlet nozzle 740 is connected to a cooling device 12 which is connected by cooling pipes 14 to a cold zone. Furthermore, the cooling device is connected via a valve 16 to be operated by a pressure gradient with a heat source 13 which is connected via heat pipes 15 to a hot zone. The heat source is connected to the intake nozzle 750. Only one cooling device 12 and one heat source 13 is shown in Figure 7, however, preferably, for each outlet nozzle 740 and intake nozzle 750 respective cooling devices 12 and heating sources 13 are provided.

The arrangement shown in Figure 7 is a rotary piston device of the type sterling engine. In the following, the working principle is explained.

As explained above, the expansion chamber is connected via the intake nozzle 750 with a heat source 13 which is connected to an external hot zone 15. In the heat source 13 compressed cold gas is heated up and fed through the intake nozzle 750 into the expansion chamber. The heated up compressed working gas expands in the expansion chamber and causes a clockwise rotation of the rotor. Simultaneously, the working gas in the compression chamber is pressed into the cooling device 12 where it is cooled down. As the rotor further rotates, the expanded working gas is fully expanded when the sliding contacts reach the area of the moveable partitions 530. Then the function of the working chamber switches from expansion chamber to compression chamber and from compression chamber to expansion chamber. The expanded hot gas will then be compressed and pressed to the cooling device 12 where it rapidly cools down.

Preferably, the working gas is helium. However, any other expandable gas can be applied.

## Claims

1. A thermal power generation system with at least one heat exchanger, the at least one heat exchanger comprising:
a main pipeline;
at least one first pipeline connected to the main pipeline and extending in a radial direction from the main pipeline at a first section of the main pipeline;
at least one second pipeline connected to the main pipeline and extending in a radial direction from the main pipeline at a second section of the main pipeline; and
at least one longitudinal pipeline wherein the at least one longitudinal pipeline connects the at least one first pipeline and the at least one second pipeline and wherein the at least one longitudinal pipeline is equipped with a heat radiator having a fractal form.

2. The system according to claim 1, further comprising a container with an inlet and an outlet, wherein the heat exchanger is arranged in the container.

3. The system according to claim 2, wherein space around the at least one heat radiator inside the container is filled with metal wools.

4. The system according to any of claims 1 to 3, wherein the at least one heat exchanger is an at least one fluid/gas heat exchanger and the main pipeline, the at least one first pipeline, the at least one second pipeline and the at least one longitudinal pipeline are adapted to transport heat transfer fluid from an external heat source.

5. The system according to claim 4, further comprising a regulation unit adapted to regulate influx or outflow of the heat transfer fluid by at least one first valve, wherein the heat exchanger further comprises an entrance at the first section of the main pipeline and an exit at the second section of the main pipeline and wherein the at least one first valve is mounted at the entrance or at the exit of the heat exchanger.

6. The system according to any of claims 1 to 5, the system comprising several heat exchangers, wherein the several heat exchangers are connected in parallel.

7. The system according to any of claims 2 to 6, the system further comprising a power conversion unit, first connecting means for connecting the outlet of the container with the power conversion unit and second connecting means for connecting the inlet of the container with the power conversion unit.

8. The system according to claim 7, wherein the second connecting means is connected to a cold exhaust outlet of the power conversion unit flows, wherein the connecting means comprise at least one pre-tank and at least one second valve for connecting the pre-tank to the container.

9. The system according to claim 7 or 8, wherein at least one additional pre-heating heat exchanger is installed which is connected to the exhaust outlet of the power conversion unit and to the pre-tank, utilizing the residual heat and pressure of the exhaust gas/air.

10. The system according to claim 9, wherein more than one heat exchanger unit are connected in parallel.

11. The system according to claim 10, wherein the pre-heating heat exchangers are regulated via valves in the entrance and exit sections of the heat exchanger unit which guide the air/gas into the heat exchanger sequentially and compress it inside the heat exchanger before open the outlet valves in the exit sections of the heat exchanger units.

12. The system according to any of claims from 7 to 11, wherein the power conversion unit is a rotary piston device comprising:
a rotor housing having an inner chamber, wherein the inner chamber has a circular side wall;
a rotor enclosed in the inner chamber, wherein the rotor is rotatable about a fixed axis within the inner chamber and the axis and the circular side wall are aligned concentric;
at least one working chamber formed by a space between the rotor and the inner chamber; and
at least one movable partition, wherein the at least one partition is movable arranged in the rotor housing and is dividing the at least one working chamber into separate sections.

13. The system according to claim 12, wherein the rotor comprises at least one sliding contact, wherein the sliding contact is in sliding contact with the circular side wall.

14. The system according to claim 12 or 13, wherein the rotary piston device further comprises at least one intake nozzle arranged in the circular side wall on one side of the movable partition and at least one outlet nozzle arranged in the circular side wall on the other side of the least one movable partition.

15. The system according to claim 13 or 14, wherein the rotary piston device comprises several working chambers separated by several sliding contacts and several movable partitions dividing each of the several working chambers into separate sections, wherein at least one intake nozzle is arranged in the circular side wall on one side of each of the movable partitions and at least one outlet nozzle is arranged in the circular side wall on the other side of each of the movable partitions.
